(19) Europäisches Patentamt

European Patent Office

Office européen des brevets

(11) **EP 1 447 971 A2**

(12) **EUROPEAN PATENT APPLICATION**

(43) Date of publication:
**18.08.2004 Bulletin 2004/34**

(51) Int Cl.$^7$: **H04N 1/40**

(21) Application number: **04250442.3**

(22) Date of filing: **28.01.2004**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **17.02.2003  KR 2003009770**<br><br>(71) Applicant: **Samsung Electronics Co., Ltd.**<br>**Suwon-city, Kyungki-do (KR)** | (72) Inventor: **Lee, Eul-hwan**<br>**Jongla-dong, Bundang-gu**<br>**Seongnam-si, GD (KR)**<br><br>(74) Representative: **Brandon, Paul Laurence et al**<br>**APPLEYARD LEES,**<br>**15 Clare Road**<br>**Halifax HX1 2HY (GB)** |

(54) **Method and apparatus for generating binary image using information on location of minority pixels**

(57)    A binary image generating method and apparatus using location information of minority pixels. A modified input pixel value u(m, n) is calculated by adding a value obtained by filtering an error value e(m, n) of a previous binary pixel to a currently input continuous tone pixel value i(m, n). An ideally optimum distance $d_{opt}(i(m, n))$ between the currently input continuous tone pixel value i(m, n) and a minority pixel is calculated. A minimum distance $d_m$ between the input pixel and minority pixels is calculated using location information of the minority pixels at minimum distances from binary pixels adjacent to the input pixel. A threshold value t(m, n) is calculated using the ideally optimum distance $d_{opt}(i(m, n))$ and the minimum distances $d_m$ for the currently input continuous tone pixel value i (m, n). The threshold value t(m, n) is compared with the modified input pixel value u(m, n) to determine a binary pixel value b(m, n) of the input pixel. The location information of the minority pixels at the minimum distances from the input pixel is then stored.

FIG. 2

**Description**

The present invention relates to methods and apparatus for generating a binary image using error diffusion, and more particularly, but not exclusively, to a method and apparatus for generating a binary image using information on the location of minority pixels, from which an image quality can be improved by homogeneously distributing binary pixels according to a threshold value calculated using the location information of the minority pixels during error diffusion.

Halftoning generally refers to a technique for expressing a continuous tone image with 256 gray levels between a black pixel (gray level 0) and a white pixel (gray level 255), as a binary image using only binary information. Ordered dithering and error diffusion are generally used for halftoning. In error diffusion, an average error can be minimized in the binary image by diffusing an error occurring during conversion of a continuous tone image into a bi-level image to neighboring pixels. As a result, the continuous tone image can be converted into a binary image with improved quality. Though the error diffusion technique requires a larger amount of calculation than the ordered dithering technique, the advancement of high-speed processors has made this technique the main halftoning technique.

The error diffusion technique is widely used in a printer unit such as a laser printer, an inkjet printer, a fax machine, or the like and can improve image quality by properly distributing black and white pixels to convert a continuous tone image into a bi-level image.

Error diffusion that was first suggested by Floyd and Steinberg, compared the modified input value with a threshold value to determine a binary value of the input pixel. The modified input value is calculated by adding the sum of filtered errors of a previous binary pixel to an input continuous image $i(m, n)$. The binary pixel value and the error can be expressed, as follows, in Equations 1 and 2, respectively:

$$b(m, n)=step[i(m, n)+\Sigma a_{jk}e(m-j,n-k)-t] \qquad (1)$$

$$e(m, n)=-b(m, n)+[i(m, n)+\Sigma a_{jk}e(m-j, n-k)] \qquad (2)$$

Herein, $b(m, n)$ is a binary pixel value that is finally output after the input pixel is processed, $i(m, n)$ is an input continuous tone pixel value to be processed, and $e(m, n)$ is an error value calculated as a difference between the binary pixel $b(m, n)$ and a modified input pixel value $u(m, n)$. Function step[•] is defined as 0 if the value in the brackets " [ ] " is a negative number, or as 255 if the value in the brackets " [ ] " is a positive number. A continuous tone image is composed of 2-dimensionally arranged pixels. Since a binary image is displayed only with a bi-level gray scale, i.e., gray level 0 and gray level 255, and uses 0- and 255- gray levels to show a mid tone, white pixels are mainly distributed at a bright gray level and black pixels are mainly distributed at a dark gray level. The quality of such a binary image depends on the patterns of binary pixels. Thus, if a gray scale value of an input image is greater than 127, a larger number of white pixels are distributed than black pixels. Therefore, black pixels are referred to as minority pixels and the quality of a binary pixel image depends on the distribution of the minority black pixels. If the gray scale value of the input image is less than or equal to 127, white pixels are called minority pixels and the quality of the binary pixel image is affected by the distribution of the white pixels.

In Equation 1, t denotes a threshold value, and has a constant value of 127 if the continuous tone image is distributed between 0 and 255. If the modified value calculated by adding the sum of the errors between the input continuous tone pixel value $i(m, n)$ and the neighboring pixels to the continuous tone pixel value $i(m ,n)$ is greater than the threshold value t, the binary pixel value $b(m, n)$ is determined to be 255. If the modified value calculated by adding the sum of the errors between the input continuous tone pixel value $i(m, n)$ and the neighboring pixels to the continuous tone pixel value $i(m ,n)$ is less than the threshold value t, the binary pixel value $b(m, n)$ is determined to be 0. The error value $e(m, n)$ is multiplied by an error diffusion coefficient $a_{jk}$ and then added to the input continuous tone pixel value $i(m, n)$.

The weight of the error diffusion coefficient $a_{jk}$ can be represented as follows, in Equation 3:

$$\begin{bmatrix} a_{00} & a_{01} & a_{02} \\ a_{10} & * & * \end{bmatrix} = \begin{bmatrix} 1/16 & 5/16 & 3/16 \\ 7/16 & * & * \end{bmatrix} \qquad ...(3)$$

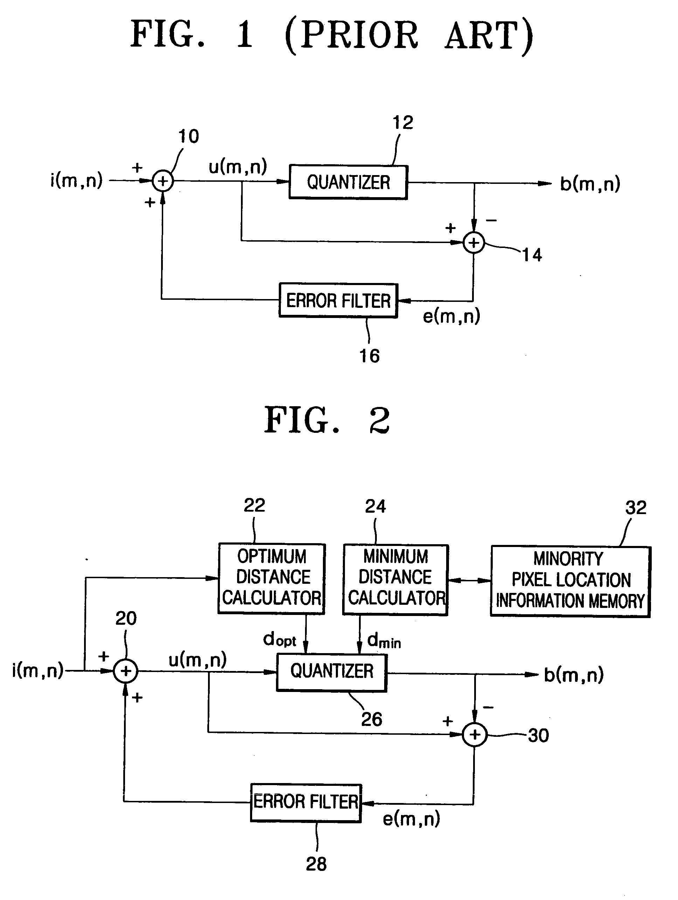

Figure 1 is a block diagram of a conventional error diffusion apparatus suggested by Floyd and Steinberg. Referring to Figure1, the conventional error diffusion apparatus includes an adder 10 which adds an input pixel value i(m, n) to an output value from an error filter 16 to obtain a modified input pixel value u(m, n), a quantizer 12 which quantizes the modified input pixel value u(m, n) to output a binary pixel value b(m, n), a subtractor 14 which subtracts the modified input pixel value u(m, n) from the quantized binary pixel value b(m, n) to generate an error value e(m, n), and the error filter 16 which filters the error value e(m, n).

The Floyd-Steinberg error diffusion apparatus generates good visual effects but does not allow binary pixels to be uniformly distributed in light and dark regions.

A variety of techniques for solving this problem have been proposed. An example of these techniques is an error diffusion halftoning scheme invented by Eshbach, and disclosed in U.S. Pat. No. 5,535,019, where binary pixels are homogeneously distributed as much as possible by adjusting a threshold value based on a gray level value and a binarized result of an input pixel. In error diffusion, a binary error is propagated over surrounding pixels to modify gray level values of the surrounding pixels. Similarly, in the Eshbach error diffusion halftoning scheme, a function defined as a threshold imprint propagates to a neighboring pixel to vary the threshold value when binarizing the value of the neighboring pixel. Compared with the Floyd-Steinberg error diffusion, this Eshbach scheme creates a binary image with homogeneously distributed binary pixels, but generates space regions with no black pixels at the boundary of a light area of the binary image and increases the amount of calculations required for the propagation of the threshold imprint.

In a method invented by Marcu, referenced in U.S. Pat. No. 6,160,921, relative locations among white or black pixels, that can be homogeneously distributed based on the intensity level of an input image, are predetermined to determine binary image values as black or white pixels based on their relative locations without comparing binary threshold values in an error diffusion process. The ranges of a dark grayscale level below 39 and a light grayscale level above 216, requiring a homogeneous pixel distribution, are set, input pixels having grayscale values contained in each of the ranges are binarized using a road map, and input pixels having mid grayscale values are binarized according to the Floyd-Steinberg error diffusion. The invented Marcu method requires an additional step of searching for a road map, based on an input grayscale level, to find the relative locations of the black or white pixels and additional buffer memories, corresponding to 9 lines.

In addition, Korean Patent Publication No. 2001-48592 discloses an image quantizing method in which the homogeneous distribution of pixels of a binary image can be achieved using a distance constraint. In this image quantizing method, an ideal distance between a black pixel in a light region and a white pixel in a dark region is pre-set in error diffusion, a threshold value is adjusted to ideally maintain an actual distance between the black and white pixels, a binarized region is converted into a 1-dimensional region, and only the 1-dimensional region is processed to reduce computer memory usage and the number of required computations. However, a comparison operation must be performed a maximum of 33 times to check whether black pixels exist within the ideal distance.

Preferred embodiments of the present invention aim to provide a binary image generating apparatus and method capable of generating minority pixels with homogeneous distribution, with a smaller number of computation by adjusting a threshold value of an input pixel using location information of three minority pixels searched for in an optimum search area in error diffusion.

In a first aspect, the present invention provides a method of generating a binary image using location information of minority pixels, including calculating a modified input pixel value u(m, n) of an input pixel by adding a value obtained by filtering an error value e(m, n), of a previous binary pixel, to a currently input continuous tone pixel value i(m, n) of the input pixel, calculating an ideally optimum distance $d_{opt}$ (i(m, n)) between the currently input continuous tone pixel value i(m, n) and a minority pixel, calculating a minimum distance $d_m$ between the input pixel and minority pixels using location information of the minority pixels at minimum distances from binary pixels adjacent to the input pixel, calculating a threshold value t(m, n) using the ideally optimum distance $d_{opt}$ (i(m, n)) and the minimum distance $d_m$ for the currently input continuous tone pixel value i(m, n), comparing the threshold value t(m, n) with the modified input pixel value u(m, n) to determine a binary pixel value b(m, n) of the input pixel, and storing the location information of the minority pixels at calculated minimum distances from the input pixel.

The ideally optimum distance $d_{opt}$(i(m, n)) may be calculated as follows:

$$d_{opt}(i(m,n)) = 1/\sqrt{\frac{i(m,n)}{255}} \qquad if\ i(m,n) \leq 127$$

$$= 1/\sqrt{1 - \frac{i(m,n)}{255}} \qquad if\ i(m,n) > 127$$

In addition, the calculation of the minimum distance $d_m$ may include calculating distances $d_1$, $d_2$, and $d_3$ between the input pixel and the minority pixels at the minimum distances from binary pixels neighboring the input pixel, and designating a minimum value of the calculated minimum distances $d_1$, $d_2$ and $d_3$ as the minimum distance $d_m$ between the input pixel and a minority pixel, wherein the distances d1, d2, and d3 between the input pixel and the minority pixels can respectively be calculated as follows:

$$d_1 = \sqrt{(a_1)^2 + (b_1 + 1)^2}$$

$$d_2 = \sqrt{(a_2\text{-}1)^2}$$

$$d_3 = \sqrt{(a_3 + 1)^2 + 1^2}$$

Herein, $(a_1, b_1)$ denotes relative coordinates of a minority pixel at a minimum distance from a (m, n-1) coordinate position of a binary pixel adjacent to coordinate (m, n) of the input pixel, $(a_3, 0)$ denotes relative coordinates of a minority pixel located at the right from a (m+1, n-1) coordinate position of a binary pixel adjacent to the (m, n) coordinates of the input pixel, and $(a_2, 0)$ denotes relative coordinates of a minority pixel located at the left from of a (m-1, n) coordinate position of a binary pixel adjacent to the (m, n) coordinates of the input pixel.

According to the present invention in a second aspect, there is provided an apparatus for generating a binary image using location information of minority pixels, including an optimum distance calculator receiving a currently input continuous tone pixel value i(m, n) of an input pixel and calculating an ideally optimum distance $d_{opt}(i(m, n))$ between the input pixel and a minority pixel using the currently input continuous tone pixel value i(m, n), a minority pixel location information memory storing location information of minority pixels, a minimum distance calculator reading the location information of the minority pixels from the minority pixel location information memory and calculating a minimum distance $d_{min}$ between the input pixel and the minority pixels, a quantizer comparing a threshold value t(m, n), calculated based on the ideally optimum distance $d_{opt}(i(m, n))$ and the minimum distance $d_{min}$ with the magnitude of a modified input pixel value u(m, n) of the input pixel to determine a binary pixel value b(m, n) for the input pixel, a subtractor subtracting the modified input pixel value u(m, n) from the binary pixel value b(m, n) to output an error value e(m, n), an error filter filtering the error value e(m, n), and an adder adding the filtered error value e(m, n) and the input pixel value i(m, n) to output the modified input pixel value u(m, n).

According to the present invention in a third aspect, there is provided a method of uniformly distributing light and/or dark regions to generate a binary image, including comparing a threshold value t(m, n), based on an ideally optimum distance $d_{opt}$ and a minimum distance $d_m$, with the a modified input pixel value u(m, n), based on a filtering of an error value e(m, n) and the input continuous tone pixel value I(m, n), to determine a binary pixel value b(m, n) of the input pixel, and storing the location information of the minority pixels at calculated minimum distances from the input pixel, wherein the ideally optimum distance $d_{opt}(i(m, n))$ is between a currently input continuous tone pixel value i(m, n) and a minority pixel, and the minimum distance $d_m$ is between the input pixel and minority pixels using location information of the minority pixels at minimum distances from binary pixels adjacent to the input pixel.

Further features of the present invention are set out in the appended claims.

The present invention will become apparent and more readily appreciated from the following description of the embodiments, by way of example only, taken in conjunction with the accompanying drawings in which:

Figure 1 is a block diagram of a conventional error diffusion apparatus suggested by Floyd and Steinberg;

Figure 2 is a block diagram of a binary image generating apparatus using location information of minority pixels, according to an embodiment of the present invention;

Figure 3 is a flowchart of a binary image generating method using location information of minority pixels, according to another embodiment of the present invention;

Figure 4 shows a search area for searching for location information of minority pixels used in the binary image generating method of Figure3;

Figure 5 is a flowchart of the calculation of a minimum distance between an input pixel and a minority pixel, according to the method illustrated in Figure3; and

Figure 6 is a flowchart of the calculation of a binary pixel value using a threshold value and a minimum distance, according to the method illustrated in Figure3.

Reference will now be made in detail to embodiments of the present invention, examples of which are illustrated in the accompanying drawings, wherein like reference numerals refer to like elements throughout.

Figure 2 is a block diagram of a binary image generating apparatus, using location information of minority pixels, according to an embodiment of the present invention. Referring to Figure2, the binary image generating apparatus includes an optimum distance calculator 22, a minority pixel location information memory 32, a minimum distance calculator 24, a quantizer 26, a subtractor 30, an error filter 28, and an adder 20. The optimum distance calculator 22 receives a currently input continuous tone pixel value $i(m, n)$ and then calculates an optimum distance $d_{opt}$ between an input pixel and a minority pixel using the currently input continuous tone pixel value $i(m, n)$. The minority pixel location information memory 32 stores location information of the minority pixel. The minimum distance calculator 24 reads the location information of the minority pixel from the minority pixel location information memory 32 to calculate a minimum distance $d_{min}$ between the input pixel and the minority pixel. The quantizer 26 compares a calculated threshold value, based on the optimum distance $d_{opt}$ and the minimum distance $d_{min}$, with the magnitude of a modified input pixel value $u(m, n)$, for the input pixel, to determine a binary pixel value for the input pixel. The subtractor 30 subtracts the modified input pixel value $u(m, n)$ from the binary pixel value $b(m, n)$ to output an error value $e(m, n)$. The error filter 28 filters the error value $e(m, n)$. The adder 20 adds the filtered error value $e(m, n)$ and the input pixel value $i(m, n)$ to output the modified input pixel value $u(m, n)$.

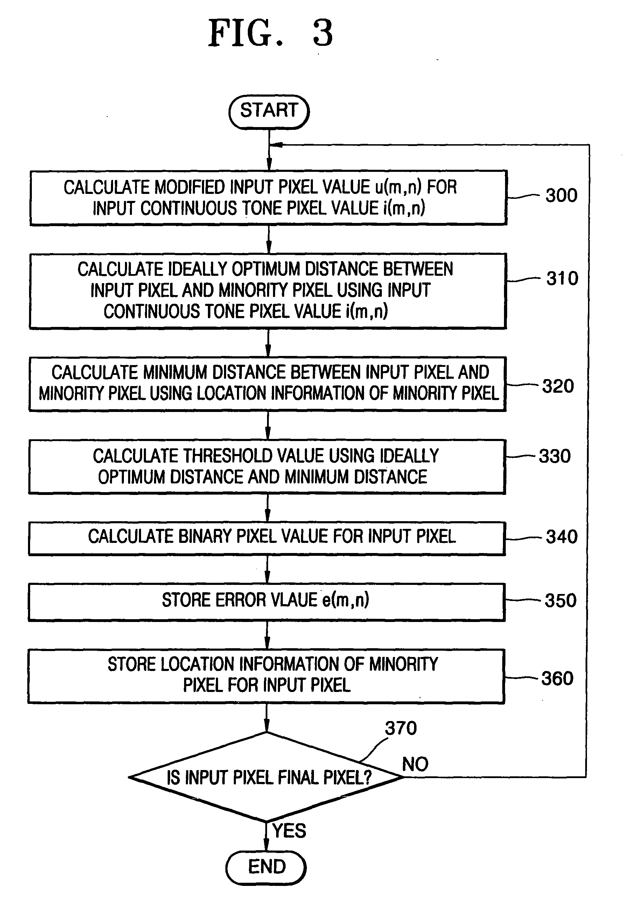

Figure 3 is a flowchart of a binary image generating method using location information of minority pixels, according to embodiments of the present invention. In operation 300, a current input pixel value $i(m, n)$ is added to a filtered error value for a previously input pixel, using Equation 1 above, to calculate a modified input pixel value $u(m, n)$. In order to homogeneously distribute pixels in a binary image, an average intensity level value must be maintained for each continuous tone pixel value and a distance between minority pixels must be defined.

In operation 310, an ideally optimum distance $d_{opt}(i(m, n))$ between the input pixel and a minority pixel is calculated using Equation 4, as follows.

$$d_{opt}(i(m,n)) = 1/\sqrt{\dfrac{i(m,n)}{255}} \qquad if\ i(m,n) \le 127$$
$$= 1/\sqrt{1 - \dfrac{i(m,n)}{255}} \qquad if\ i(m,n) > 127 \qquad \text{...(4)}$$

In Equation 4, as the currently input pixel value $i(m, n)$ approaches a mid-level value of 127, the the ideally optimum distance $d_{opt}(i(m, n))$ between the input pixel and the minority pixel is reduced, while as the currently input pixel value $i(m, n)$ approaches 0 (black pixel) or 255 (white pixel), the ideally optimum distance $d_{opt}(i(m, n))$ is increased.

In step 320, a minimum distance $d_{min}$ between the input pixel and the minority pixels is set using the location information of the minority pixels. In the calculation of the minimum distance $d_{min}$, if the input pixel value $i(m, n)$ is greater than 127, a black pixel is set to be the minority pixel to calculate the minimum distance $d_{min}$.

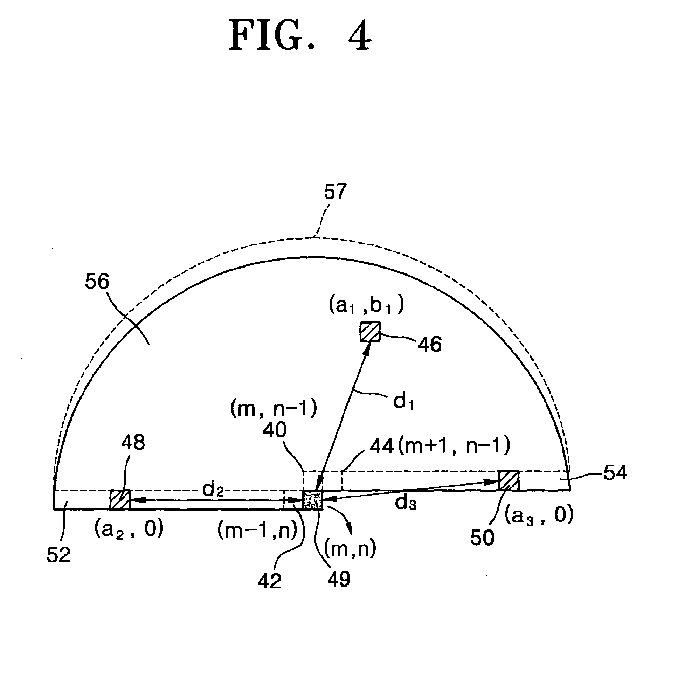

Figure 4 illustrates a search area for searching for the location information of the minority pixel, used in the binary image generating method of Figure3. Let us assume that the input pixel value $i(m, n)$ in Equation 4 has a value between 0 and 255. A maximum value of the ideally optimum distance $d_{opt}(i(m, n))$ is then 15.969 when the input pixel value $i(m, n)$ is 1 and 254, respectively. The maximum value of the ideally optimum distance $d_{opt}(i(m, n))$ is infinite when the input pixel value i(m, n) is 0 and 255, respectively. Therefore, a search area 56, in which minority pixels are to be searched for to calculate the minimum distance $d_{min}$, is semicircular as illustrated in Figure4 and includes the upper 16 lines, from (m, n) coordinates of a currently input pixel 49, and 16 pixels to the left and right. The search area 56 may be shaped as illustrated with solid lines for calculating a distance from the (m, n) coordinates of the currently input pixel 49. The search area 57 is shaped as illustrated with dotted lines to search the closest minority pixel from (m, n-1) coordinates of a previously input pixel 40.

As illustrated in Figure4, the search area 56 centering around the (m, n-1) coordinates of the previously input pixel 40 is almost identical to the area centering around the (m, n) coordinates of the currently input pixel 49. The search area 56 centering around the currently input pixel 49 includes a 1-dimensional region 54, to the right, and a 1-dimensional region 52 to the left. Thus, the distance between the currently input pixel 49 and a minority pixel can be calculated using only location information of a minority pixel at a minimum distance from the (m, n-1) coordinates of the previously input pixel 40 and location information of minority pixels in the 1-dimensional regions 54 and 52 located to the right and left of the currently input pixel 49. When relative coordinates of a minority pixel 46 at a minimum distance from the (m, n-1) coordinates of the previously input pixel 40 are (a1, b1), the relative coordinates of the minority pixel 46 at a distance d1 from the (m, n) coordinates of the currently input pixel 49 in the search area 56 are (a1, b1+1). When relative coordinates of a minority pixel 48 at a minimum distance from (m-1, n) coordinates of a binary pixel 42 in the 1-dimensional region 52 are (a2, 0), relative coordinates of the minority pixel 48 at a distance d2 from the (m, n) coordinates of the currently input pixel 49 are (a2-1, 0). When relative coordinates of a minority pixel 50 at a minimum distance from (m+1, n-1) coordinates of a binary pixel 44 are (a3, 0), the relative coordinates of the minority pixel 50 at a distance d3 from the (m, n) coordinates of the currently input pixel 49 are (a3+1, 1). The ranges of coordinate parameters a1, a2, a3, and b1 for indicating relative locations are as follows, in Equations 5:

$$- 16 \leq a_1 \leq 16,$$

$$- 16 \leq a_2 \leq 0, \tag{5}$$

$$0 \leq a_3, b_1 \leq 16$$

The distances d1, d2, and d3 from the (m, n) coordinates of the currently input pixel 49 to the (a1, b1+1), (a2-1, 0), and (a3+1, 1) coordinates of the respective minority pixels 46, 48, and 50 can be calculated using the following Equations 6, 7, and 8, respectively:

$$d_1 = \sqrt{(a_1)^2 + (b_1 + 1)^2} \tag{6}$$

$$d_2 = \sqrt{(a_2 - 1)^2} \tag{7}$$

$$d_3 = \sqrt{(a_3 + 1)^2 + 1^2} \tag{8}$$

The smallest value from the three values calculated from Equations 6, 7, and 8 is selected for calculating a minimum distance $d_{min}(i(m, n))$ between a currently input pixel and minority pixels, using Equation 9, as follows:

$$d_{min} (i(m, n)) = Min(d_1, d_2, d_3) \tag{9}$$

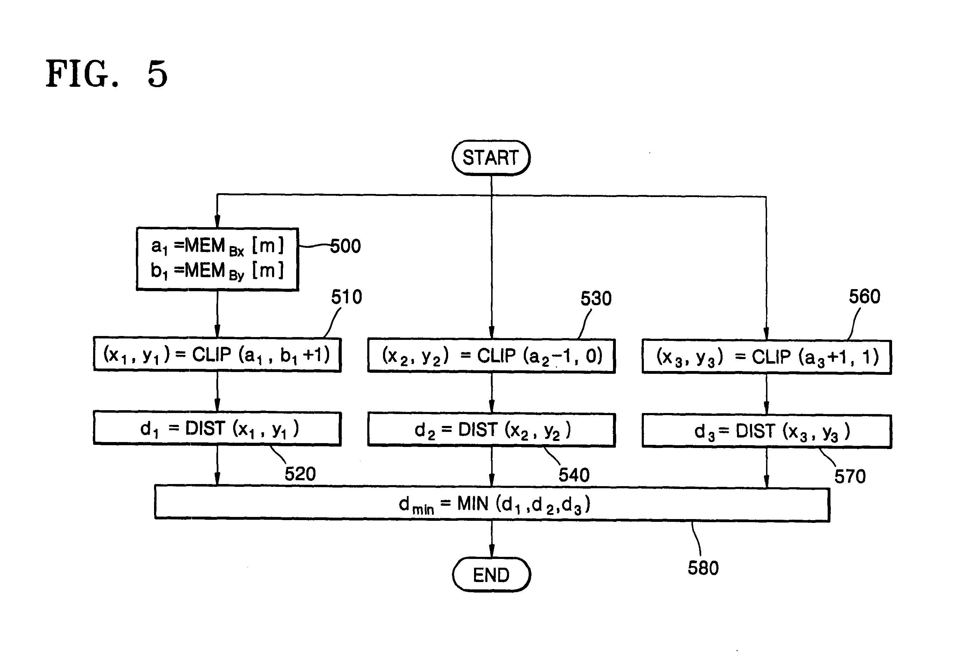

Figure 5 is a flowchart of the calculation of the minimum distance $d_{min}$ between the input pixel and the minority pixels of Figure3, in a case where the minority pixel is a black pixel.

In operation 500, MEMBX and MEMBY are the location information of the minority black pixel stored in the minority pixel location information memory 32, shown in Figure2, and indicate relative coordinates of the minority black pixel at a minimum distance from the minority black pixel at the coordinate position (m, n-1). Alternatively, even when the minority pixel is a white pixel, relative coordinates of the white pixel may be stored in the minority pixel location information memory 32.

In operations 510, 520, 530, 540, 560, 570, and 580, distances between an input pixel and minority pixels are calculated using Equations 5 through 9 above. Since the maximum value of the ideally optimum distance is approximately 16, if the minimum distances exceed 16, the distances between the input pixel and the minority pixels are clipped to 16, as shown in Equation 10, to prevent distance information from being unnecessarily processed:

$$(p_2, q_2) = CLIP(p_1, q_1) = \begin{Bmatrix} (16,16) \\ (p_1, q_1) \end{Bmatrix} \; else \; if \; p_1 \geq 16 \; or \; q_1 \geq 16 \qquad ...(10)$$

Herein, $(p_1, q_1)$ coordinates are relative coordinates of a minority pixel located within an optimum distance from (x, y) coordinates of a currently input pixel. If the $(p_2, q_2)$ coordinates go beyond the optimum distance, the relative coordinates of the minority pixel are set to 16.

A distance d is calculated by substituting the $(p_2, q_2)$ relative coordinates of the minority pixel in Equation 11, as follows:

$$d = DIST(p, q) = \sqrt{p^2 + q^2} \qquad\qquad (11)$$

In operation 580, the smallest distance value is selected as the minimum distance $d_{min}$ from the distances d1, d2, and d3.

In operations 330 and 340, of Figure 3, a binary pixel value for a continuous tone pixel, input as a threshold value is calculated using the ideally optimum distance $d_{opt}$ (i(m, n)) and the minimum distance $d_{min}$ calculated in operations 310 and 320.

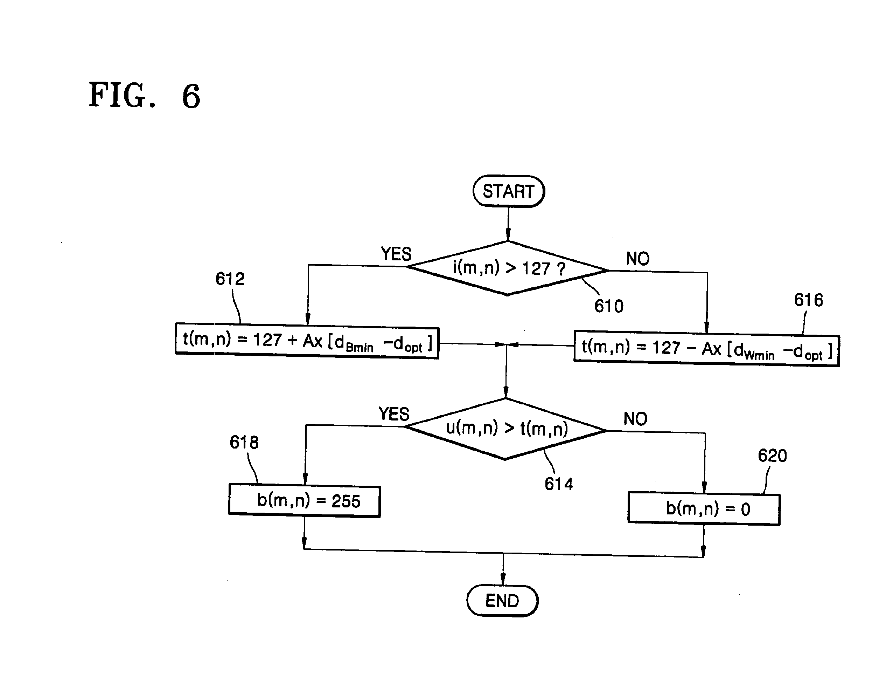

Figure 6 is a flowchart of the calculation of the binary pixel value of Figure 3.

The threshold value is calculated using the relationship between a distance using location information of a minority pixel at a minimum distance from a surrounding binary pixel and an optimum distance determined by a grayscale value of an input pixel. The threshold value can be expressed, in Equation 12, as follows:

$$\begin{aligned} t(m,n) &= 127 - A \times (d_{W\min}(i(m,n)) - d_{opt}(i(m,n)) \quad if \; i(m,n) \leq 127 \\ &= 127 + A \times (d_{B\min}(i(m,n)) - d_{opt}(i(m,n)) \quad if \; i(m,n) > 127 \end{aligned} \qquad ...(12)$$

Herein, A is a positive constant.

If the currently input pixel value i (m, n) is greater than 127, in operation 610, a black pixel minimum distance $d_{Bmin}$, between minority black pixels and the currently input pixel, is compared with the ideally optimum distance $d_{opt}$. If the black pixel minimum distance $d_{Bmin}$ is greater than the ideally optimum distance $d_{opt}$, in operation 612, the threshold value t(m, n) is set to be greater than 127. Thus, in operations 614 and 620, the possibility for the currently input pixel to be determined as a black pixel is high.

If the currently input pixel value i(m, n) is less than or equal to 127, in operation 610, a white pixel minimum distance $d_{Wmin}$ between minority white pixels and the currently input pixel, is compared with the ideally optimum distance $d_{opt}$. If the white pixel minimum distance $d_{Wmin}$ is greater than the ideally optimum distance $d_{opt}$, in operation 616, the threshold value t(m, n) is set to be less than 127. In operations 614 and 618, the currently input pixel is highly likely to be determined as a white pixel.

Accordingly, if the currently input pixel value i(m, n) is less than or equal to 127 and the white pixel minimum distance $d_{Wmin}$ is greater than the ideally optimum distance $d_{opt}$, a white pixel can be output by lowering the threshold value t(m, n). If the white pixel minimum distance $d_{Wmin}$ is less than the ideally optimum distance $d_{opt}$, a black pixel can be output by increasing the threshold value t(m, n). As a result, output minority pixels can have a homogeneous distribution.

If the binary pixel value is determined, in operation 350, an error value calculated from the binary pixel value and a modified input pixel value is stored. In operation 360, location information of a minority pixel for the input pixel is stored in the minority pixel location information memory 32, so as to use updated location information of the minority pixel when calculating a binary pixel value of a next input pixel. In operation 370, a determination is made whether the input pixel is a final pixel. If the input pixel is not the final pixel, the process moves to operation 300 to generate a binary pixel value of a next input pixel.

As described above, in error diffusion, according to embodiments of the present invention, minority pixels can be uniformly distributed in both light and dark regions to obtain a binary image with improved quality. A binary pixel value is created using location information of a minority pixel at a minimum distance from an already-processed neighboring binary pixel to calculate a minimum distance between a currently input pixel and minority pixels. As a result, the required number of computations can be reduced.

Although a few embodiments of the present invention have been shown and described, it will be appreciated by those skilled in the art that changes may be made in these embodiments without departing from the principles and spirit of the invention, the scope of which is defined in the appended.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1.   A method of generating a binary image using location information of minority pixels, the method comprising:

calculating a modified input pixel value u(m, n) of an input pixel by adding a value obtained by filtering an error value e(m, n), of a previous binary pixel, to a currently input continuous tone pixel value i(m, n) of the input pixel;

calculating an ideally optimum distance $d_{opt}$ (i(m, n)) between the currently input continuous tone pixel value i(m, n) and a minority pixel;

calculating a minimum distance $d_m$ between the input pixel and minority pixels using location information of the minority pixels at minimum distances from binary pixels adjacent to the input pixel;

calculating a threshold value t(m, n) using the ideally optimum distance $d_{opt}$(i(m, n)) and the minimum distance $d_m$ for the currently input continuous tone pixel value i (m, n);

comparing the threshold value t(m, n) with the modified input pixel value u(m, n) to determine a binary pixel value b(m, n) of the input pixel; and

storing the location information of the minority pixels at calculated minimum distances from the input pixel.

2.   The method of claim 1, wherein the ideally optimum distance $d_{opt}$(i(m, n)) is calculated as follows:

$$d_{opt}(i(m,n)) = 1/\sqrt{\frac{i(m,n)}{255}} \qquad if\ i(m,n) \le 127$$

$$= 1/\sqrt{1 - \frac{i(m,n)}{255}} \qquad if\ i(m,n) > 127$$

3.  The method of claim 1 or claim 2, wherein the calculation of the minimum distance $d_m$ comprises:

    calculating distances $d_1$, $d_2$, and $d_3$ between the input pixel and the minority pixels at the minimum distances from binary pixels neighboring the input pixel; and

    designating a minimum value of the calculated minimum distances $d_1$, $d_2$ and $d_3$ as the minimum distance $d_m$ between the input pixel and a minority pixel.

4.  The method of claim 3, wherein the distances d1, d2, and d3 between the input pixel and the minority pixels are respectively calculated as follows:

$$d_1 = \sqrt{(a_1)^2 + (b_1 + 1)^2}$$

$$d_2 = \sqrt{(a_2 - 1)^2}$$

$$d_3 = \sqrt{(a_3 + 1)^2 + 1^2}$$

    wherein $(a_1, b_1)$ denotes relative coordinates of a minority pixel at a minimum distance from a (m, n-1) coordinate position of a binary pixel adjacent to coordinate (m, n) of the input pixel, $(a_3, 0)$ denotes relative coordinates of a minority pixel located at the right from a (m+1, n-1) coordinate position of a binary pixel adjacent to the (m, n) coordinates of the input pixel, and $(a_2, 0)$ denotes relative coordinates of a minority pixel located at the left from of a (m-1, n) coordinate position of a binary pixel adjacent to the (m, n) coordinates of the input pixel.

5.  The method of any preceding claim, wherein the threshold value t(m, n) is calculated as follows:

$$t(m,n) = 127 - A \times (d_{w\min}(i(m,n)) - d_{opt}(i(m,n))) \quad if \ i(m,n) \leq 127$$
$$= 127 + A \times (d_{B\min}(i(m,n) - d_{opt}(i(m,n))) \quad if \ i(m,n) > 127$$

    wherein A is a positive constant, $d_{W\min}$ is a minimum distance between minority white pixels and the currently input pixel, and $d_{B\min}$ is a minimum distance between minority black pixels and the currently input pixel.

6.  The method of claim 1, wherein the binary pixel value b(m, n) is calculated as follows:

$$u(m,n) = i(m,n) + \Sigma a_{jk} e(m-j, \ n-k)$$

$$e(m,n) = u(m,n) - b(m,n)$$

$$b(m,n) = 0 \quad if \ u(m,n) \leq t(m,n)$$
$$= 255 \quad if \ u(m,n) > t(m,n)$$

7.  An apparatus for generating a binary image using location information of minority pixels, the apparatus comprising:

    an optimum distance calculator (22) receiving a currently input continuous tone pixel value i(m, n) of an input pixel and calculating an ideally optimum distance $d_{opt}$ (i (m, n)) between the input pixel and a minority pixel using the currently input continuous tone pixel value i(m, n);

a minority pixel location information memory (32) storing location information of minority pixels;

a minimum distance calculator (24) reading the location information of the minority pixels from the minority pixel location information memory (32) and calculating a minimum distance $d_{min}$ between the input pixel and the minority pixels;

a quantizer (26) comparing a threshold value t(m, n), calculated based on the ideally optimum distance $d_{opt}$(i(m, n)) and the minimum distance $d_{min}$ with the magnitude of a modified input pixel value u(m, n) of the input pixel to determine a binary pixel value b(m, n) for the input pixel;

a subtractor (30) subtracting the modified input pixel value u(m, n) from the binary pixel value b(m, n) to output an error value e(m, n);

an error filter (28) filtering the error value e(m, n); and

an adder (20) adding the filtered error value e(m, n) and the input pixel value i(m, n) to output the modified input pixel value u(m, n).

8. The apparatus of claim 7, wherein the optimum distance calculator (22) calculates the ideally optimum distance $d_{opt}$(i(m, n)) as follows:

$$d_{opt}(i(m,n)) = 1/\sqrt{\frac{i(m,n)}{255}} \qquad if\ i(m,n) \leq 127$$

$$= 1/\sqrt{1 - \frac{i(m,n)}{255}} \qquad if\ i(m,n) > 127$$

9. The apparatus of claim 7 or claim 8, wherein the calculating of $d_{min}$ by the minimum distance calculator (24) comprises:

calculating distances $d_1$, $d_2$ and $d_3$ between input pixel and the minotiry pixels at the minimum distances from binary pixels neighboring the input pixel; and

designating a minimum value of the calculated minimum distances $d_1$, $d_2$ and $d_3$ as the minimum distance $d_m$ between the input pixel and a minority pixel.

10. The apparatus of any one of claims 7-9, wherein the minimum distance calculator (24) further calculates the minimum distances $d_1$, $d_2$, and $d_3$ between the input pixel and the minority pixels, respectively, as follows:

$$d_1 = \sqrt{(a_1)^2 + (b_1 + 1)^2}$$

$$d_2 = \sqrt{(a_2-1)^2}$$

$$d_3 = \sqrt{(a_3 + 1)^2 + 1^2}$$

wherein $(a_1, b_1)$ denotes relative coordinates of a minority pixel at a minimum distance from a (m, n-1) coordinate position of a binary pixel adjacent to coordinates (m, n) of the input pixel, $(a_3, 0)$ denotes relative coordinates of a minority pixel located at the right from a (m+1, n-1) coordinate position of a binary pixel adjacent to the coordinates (m, n) of the input pixel, and $(a_2, 0)$ denotes relative coordinates of a minority pixel located at the left from of a (m-1, n) coordinate position of a binary pixel adjacent to the coordinates (m, n) of the input pixel.

**11.** The apparatus of any one of claims 7-10, wherein the quantizer (26) determines the threshold value t(m, n) as follows:

$$t(m,n) = 127 - A \times (d_{W\min}(i(m,n)) - d_{opt}(i(m,n)) \quad if \quad i(m,n) \le 127$$
$$= 127 + A \times (d_{B\min}(i(m,n)) - d_{opt}(i(m,n)) \quad if \quad i(m,n) > 127$$

wherein A is a positive constant, $d_{W\min}$ is a minimum distance between minority white pixels and the currently input pixel, and $d_{B\min}$ is a minimum distance between minority black pixels and the currently input pixel.

**12.** A method of uniformly distributing light and/or dark regions to generate a binary image, comprising:

comparing a threshold value t(m, n), based on an ideally optimum distance $d_{opt}$ and a minimum distance $d_m$, with the a modified input pixel value u(m, n), based on a filtering of an error value e(m, n) and the input continuous tone pixel value I(m, n), to determine a binary pixel value b(m, n) of the input pixel; and

storing the location information of the minority pixels at calculated minimum distances from the input pixel, wherein the ideally optimum distance $d_{opt}$ (i(m, n)) is between a currently input continuous tone pixel value i (m, n) and a minority pixel, and the minimum distance $d_m$ is between the input pixel and minority pixels using location information of the minority pixels at minimum distances from binary pixels adjacent to the input pixel.

# FIG. 1 (PRIOR ART)

# FIG. 2

# FIG. 3

START

| CALCULATE MODIFIED INPUT PIXEL VALUE u(m,n) FOR INPUT CONTINUOUS TONE PIXEL VALUE i(m,n) | 300 |

| CALCULATE IDEALLY OPTIMUM DISTANCE BETWEEN INPUT PIXEL AND MINORITY PIXEL USING INPUT CONTINUOUS TONE PIXEL VALUE i(m,n) | 310 |

| CALCULATE MINIMUM DISTANCE BETWEEN INPUT PIXEL AND MINORITY PIXEL USING LOCATION INFORMATION OF MINORITY PIXEL | 320 |

| CALCULATE THRESHOLD VALUE USING IDEALLY OPTIMUM DISTANCE AND MINIMUM DISTANCE | 330 |

| CALCULATE BINARY PIXEL VALUE FOR INPUT PIXEL | 340 |

| STORE ERROR VLAUE e(m,n) | 350 |

| STORE LOCATION INFORMATION OF MINORITY PIXEL FOR INPUT PIXEL | 360 |

370

IS INPUT PIXEL FINAL PIXEL? — NO

YES

END

# FIG. 4

# FIG. 5

START

$a_1 = MEM_{Bx}[m]$
$b_1 = MEM_{By}[m]$ — 500

$(x_1, y_1) = CLIP(a_1, b_1+1)$ — 510

$(x_2, y_2) = CLIP(a_2-1, 0)$ — 530

$(x_3, y_3) = CLIP(a_3+1, 1)$ — 560

$d_1 = DIST(x_1, y_1)$ — 520

$d_2 = DIST(x_2, y_2)$ — 540

$d_3 = DIST(x_3, y_3)$ — 570

$d_{min} = MIN(d_1, d_2, d_3)$ — 580

END

EP 1 447 971 A2

# FIG. 6

EP 1 447 971 A2

START

YES ← i(m,n) > 127 ? → NO

612

610

616

t(m,n) = 127 + Ax [d$_{Bmin}$ − d$_{opt}$]

t(m,n) = 127 − Ax [d$_{Wmin}$ − d$_{opt}$]

YES ← u(m,n) > t(m,n) → NO

618

614

620

b(m,n) = 255

b(m,n) = 0

END